# EUROPÄISCHE PATENTSCHRIFT

(11) **EP 0 843 966 B1**
(45) Veröffentlichungstag und Bekanntmachung des Hinweises auf die Patenterteilung: **11.09.2002**
(21) Anmeldenummer: 97120163.7
(22) Anmeldetag: 18.11.1997
(51) Int. Cl.: A01N 35/04, A01N 35/02, C07C 43/307, C02F 1/50

(54) **Verfahren zur Herstellung von wässrigen o-Phthalaldehyd-Glutaraldehydlösungen**
Preparation of aqueous solutions comprising o-phthalaldehyde and glutaraldehyde
Préparation des solutions aqueuses de l'o-phtalaldéhyde et glutaraldéhyde

(30) Priorität: 26.11.1996 AT 205396
(43) Veröffentlichungstag der Anmeldung: 27.05.1998
(73) Patentinhaber: DSM Fine Chemicals Austria Nfg GmbH & Co KG, 4021 Linz (AT)
(72) Erfinder: Giselbrecht, Karl Heinz, Dr., 4061 Pasching (AT); Perndorfer, Eduard, 4050 Traun (AT)
(74) Vertreter: Klostermann, Ingrid

(56) Entgegenhaltungen:
- EP-A- 0 292 300
- EP-A- 0 522 312
- WO-A-96/15668
- DE-A- 3 108 790
- US-A- 4 244 876
- US-A- 5 128 051

## Beschreibung

Wässrige o-Phthalaldehyd-(OPA)-Glutaraldehydlösungen wurden bisher durch einfaches Lösen von kristallinem OPA in einer wässrigen Glutaraldehydlösung hergestellt und werden beispielsweise zur Herstellung von Bioziden verwendet. (US 5,128,051)

OPA liegt in kristalliner Form vor und weist in dieser Form einige Nachteile auf, da es giftig ist und zu Hautreizungen führt, sodaß das Handling mit OPA erschwert wird. Weiters neigt OPA bei längerer Lagerung zum Verblocken, wodurch langwierige Löseprozesse erforderlich werden, die eventuell zu einer Verfärbung des OPA führen können.

Aufgabe der vorliegenden Erfindung war es daher eine Herstellungsmöglichkeit für wässrige OPA-Glutaraldehydlösungen zu finden, bei der ein direktes Handling mit kristallinem OPA und die Nachteile beim Lagern von OPA vermieden werden können.

Unerwarteterweise konne diese Aufgabe durch ein Verfahren gelöst werden, bei welchem die wässrige OPA-Glutaraldehydlösung durch Spaltung eines OPA-Acetals in wässriger Glutaraldehydlösung erhalten wird.

Gegenstand der vorliegenden Erfindung ist demnach ein Verfahren zur Herstellung einer wässrigen o-Phthalaldehyd-Glutaraldehydlösung, das dadurch gekennzeichnet ist, daß ein Acetal des o-Phthalaldehyds in einer 10 bis 60 %igen wässrigen Glutaraldehydlösung bei Raumtemperatur bis 100°C durch Abspalten des entsprechenden Alkohols in o-Phthalaldehyd überführt und der abgespaltenen Alkohol entfernt wird, worauf die wässrige o-Phthalaldehyd-Glutaraldehydlösung erhalten wird.

Bei dem erfindungsgemäßen Verfahren wird von einem Acetal des OPA ausgegangen. Geeignete Acetale sind beispielsweise Dialkoxyphthalane oder Tetraalkylacetale des OPA mit bevorzugt 1 bis 4 C-Atome im Alkoxyteil. Besonders bevorzugt werden Dialkoxyphthalane eingesetzt.
Tetraalkylacetale des OPA sind beispielsweise in EP 0 522 312 beschrieben. Auch DE 31 08 790 A1 beschreibt solche Acetate und deren Überführung in die Aldehyde durch saure wäßrige Hydrolyse oder bevorzugt unter wasserfreien Bedingungen. Das entsprechende Dialkoxyphthalan kann beispielsweise durch ein Verfahren, das beispielsweise von verunreinigtem OPA ausgeht, erhalten werden. Dabei wird zunächst eine Lösung eines durch ein beliebiges Herstellungsverfahren erhaltenen OPA's in einem Alkohol mit 1 bis 4 C-Atomen hergestellt. Alkohole mit bevorzugt 1 bis 4 C-Atomen sind Methanol, Ethanol, Propanol und Butanol. Bevorzugt werden Methanol und Ethanol, besonders bevorzugt Methanol eingesetzt.

OPA kann dabei beispielsweise aus Dimethoxybenzol, auf elektrochemischem Weg oder durch Ozonolyse von Naphthalin hergestellt werden. Bevorzugt wird ein durch Ozonolyse, beispielsweise gemäß AT-PS 380.008, hergestellter OPA verwendet. Wird von einem durch Ozonolyse von Naphthalin hergestellten OPA ausgegangen, so liegt dieser, nach erfolgter Ozonolyse, Reduktion der Peroxide und anschließender Abtrennung des Katalysators bereits als alkoholische Lösung vor.
In dieser Lösung sind neben dem verunreinigten OPA noch Naphthalin, Phthalid, Methoxyphthalan, sowie Aldehydsäuren und Aldehydester, wie etwa Glyoxal, Glykolsäureester oder Glyoxylsäureester, oder Bruchstücke davon bzw. deren Natriumsalze enthalten, wobei der Grad der Verunreinigung von der Güte des Hydrierkatalysators abhängig ist und zwischen 5 und 90 % beträgt. Das Verfahren ist dabei unabhängig von der Art und dem Gehalt an Verunreinigungen. Die den verunreinigten OPA enthaltende alkoholische Lösung wird sodann durch Ansäuern auf einen pH-Wert zwischen 0 und 3, bevorzugt zwischen 0,5 und 2, gestellt. Zum Ansäuern eignen sich dabei Mineralsäuren, wie etwa HCI, H₂SO₄, H₃PO₄, organische Säuren, wie etwa Ameisensäure, Essigsäure, p-Toluolsulfonoder Methylsulfonsäure oder saure Ionentauscher. Bevorzugt werden Mineralsäuren, besonders bevorzugt H₂SO₄ eingesetzt. Die Temperatur bei diesem Schritt beträgt 0 bis 65°C, bevorzugt 15 bis 30°C. Durch das Ansäuern wird der zu reinigende OPA in das entsprechende Dialkoxyphthalan überführt.

Ein sich eventuell bildender Niederschlag an Natriumsulfat wird gegebenenfalls abgetrennt und die verbleibende Lösung des gebildeten Phthalans wird im nächsten Schritt mit einer bis zu 50 %igen wässrigen Lauge versetzt. Als Lauge eignen sich beispielsweise Natronlauge oder Kalilauge. Bevorzugt wird Natronlauge eingesetzt.

Anschließend bzw. gleichzeitig wird der als Lösungsmittel verwendete Alkohol abdestilliert.
Der gewählte Druck und Temperatur sind dabei vom eingesetzten Alkohol abhängig. Nach dem Abdestillieren des Alkohols, verbleibt eine das Phthalan enthaltende Salzlösung. Sind in dieser Lösung feste Salze vorhanden, so wird mit Wasser verdünnt, um diese Salze in Lösung zu bringen.

Während die Verunreinigungen wie Ester, Säuren u.s.w. als Natriumsalze in der wässrige Phase verbleiben, wird das entsprechende Dialkoxyphthalan mit gängigen Extraktionsmitteln wie etwa mit Ethern, beispielsweise mit Diethylether, Diisopropylether, Methyltertiärbutylether, u.s.w. oder mit Essigester, Toluol, u.s.w. aus der organischen Phase extrahiert.

Bevorzugt werden Methyltertiärbutylether, Essigester und Toluol als Extraktionsmittel eingesetzt. Die gewählte Temperatur während des Extraktionsvorganges ist vom verwendeten Extraktionsmittel abhängig und liegt bevorzugt zwischen Raumtemperatur und 80°C.
Das so erhaltene Dialkoxyphthalan kann destillativ gereinigt werden und liegt sodann als farblose Flüssigkeit vor, die bei Raumtemperatur unbegrenzt lagerbar ist.

Die Menge an eingesetztem Acetal richtet sich nach der gewünschten Endkonzentration an OPA in der Glutaraldehydlösung. Mit dem erfindungsgemäßen Verfahren können dabei Glutaraldehydlösungen mit einem OPA-Gehalt von bis zu 30 Gew.% erhalten werden. Als wässrige Glutaraldehydlösung wird eine 10 bis 60 Gew.%ige Lösung, bevorzugt eine 30 bis 55 Gew.%ige Lösung, verwendet.

Das Acetal wird sodann in der der gewünschten Endkonzentration an OPA entsprechenden Menge mit der wässrigen Glutaraldehydlösung vermischt. Anschließend wird noch mit soviel Wasser verdünnt, daß bei der folgenden Destillation des abgespaltenen Alkohols die Konzentration der Glutaraldehydlösung konstant gehalten wird.
Die Reaktionstemperatur hängt dabei vom Alkoxyrest des Acetals ab und liegt bevorzugt zwischen Raumtemperatur und 100°C. Die Reaktion zu OPA kann weiters bei einem Druck in Abhängigkeit vom Alkoxyrest von Normaldruck bis zu einem Druck von 300 mbar, bevorzugt bis zu einem Druck von 200 mbar, durchgeführt werden.

Der sich abspaltende Alkohol wird sodann unter Vakuum abdestilliert. Gegebenenfalls wird zur Erhaltung einer konstanten Konzentration wiederum Wasser zugegeben.
Die so erhaltene wässrige OPA-Glutaraldehydlösung kann durch weiteres Verdünnen mit Glutaraldehydlösung auf einen OPA-Gehalt von 1 bis 30 Gew.%, bevorzugt von 1 bis 10 Gew.%, eingestellt werden und kann beispielsweise direkt zur Biozidherstellung verwendet werden.

### Beispiel 1:

900 ml Glutaraldehyd (50 %ige wässrige Lösung, Fa. Union Carbide, UN 1760), 100 ml ungereinigtes gelbliches Dimethoxyphthalan (erhalten aus der OMPA-Anlage der Fa. DSM Chemie Linz)
und 500 ml VE-Wasser wurden vermischt (pH 3,58) und bei 200 mbar Vakuum über 6,5 Stunden 1228 g an Wasser/Methanol-Gemisch über Kopf abgezogen. Gleichzeitig wurden weitere 900 g VE-Wasser zugetropft.
Die Sumpftemperatur betrug 60,9°C, die Temperatur am Kopf lag bei 59,4°C. Anschließend wurden weitere 250 g VE-Wasser zugetropft und wiederum über Kopf abdestilliert. Die Sumpftemperatur lag bei 61,1°C, im Sumpf verblieben 1315 g Lösung mit einem pH von 3,47. Die Temperatur am Kopf betrug 59,7°C, es wurden 189 g Destillat erhalten. Der Endpunkt der Reaktion wurde mittels GC bestimmt, eine vollständige Spaltung war bei einem Gehalt von <0,1 Fl% an Acetal erreicht.
100 g Sumpflösung wurden mit 107 g 50 %iger wässriger Glutaraldehydlösung vermischt, wodurch ein Gehalt an OPA von etwa 3 Gew.% erhalten wurde. Die Farbzahl dieser wässrigen OPA-Glutaraldehydlösung wurde ermittelt: H = 76

### Beispiel 2:

900 ml Glutaraldehyd (50 %ige wässrige Lösung, Fa. Union Carbide) und 100 ml destilliertes farbloses Dimethoxyphthalan (aus OMPA-Anlage, Fa. DSM Chemie Linz) wurden vermischt und mit 500 g VE-Wasser versetzt.
Anschließend wurde bei 200 mbar über Kopf ein Wasser/Methanol-Gemisch abgezogen, wobei in den ersten 4 Stunden weitere 1000 g VE-Wasser langsam zugetropft werden.

Die Sumpftemperatur betrug 60,3 - 61,3°C, die Kopftemperatur 59,6 - 59,9°C. Nach 7 Stunden wurden 1103 g Lösung im Sumpf und 1468 g Destillat erhalten. Die Sumpflösung enthielt ca. 7,4 Gew.% OPA und ca 48 % Wasser. 100 g Sumpflösung wurden mit 148 g 50 %iger Glutaraldehydlösung verdünnt, sodaß der Gehalt an OPA ca. 3 Gew.% betrug.
Die Farbzahl der verdünnten Lösung wurde ermittelt: H=58
Als Vergleich wurde eine Lösung von 3 Gew.% OPA in 50 %iger Glutaraldehydlösung, durch einfaches Lösen der entsprechenden OPA-Menge hergestellt und die Farbzahl ermittelt: H = 71

### Beispiel 3:

800 ml Glutaraldehyd (50 %ige wässrige Lösung, Fa. Union Carbide) wurden mit 200 ml frisch destilliertem Dimethoxyphthalan (aus OMPA-Anlage, Fa. DSM Chemie Linz) vermischt, mit 500 ml VE-Wasser versetzt und ein Wasser/Methanol Gemisch bei 200 mbar über Kopf abgezogen.
In den ersten 4 Stunden der Destillation wurden weitere 1000 ml VE-Wasser langsam zugetropft. Die Sumpftemperatur betrug 61,2 - 61,4°C, die Kopftemperatur 59,1 - 61,1°C.
Nach 7 Stunden wurden 1434 g Destillat erhalten. Anschließend wurden weitere 500 g Wasser zugetropft und weitere 9 Stunden destilliert. Es wurden 513 g Destillat abgezogen und 1137 g Sumpflösung erhalten.
Die Sumpflösung enthielt ca. 14,6 Gew.% OPA und ca. 45 % Wasser.
100 g Sumpflösung wurden mit 386,6 g 50 %iger Glutaraldehydlösung verdünnt, sodaß ein OPA-Gehalt von ca. 3 Gew.% eingestellt wurde.
Die Farbzahl der verdünnten Lösung wurde ermittelt: H = 58

### Beispiel 4:

700 ml Glutaraldehyd (50 %ige wässrige Lösung, Fa. Union Carbide) wurden mit 300 ml frisch destilliertem Dimethoxyphthalan (aus OMPA-Anlage, Fa. DSM Chemie Linz) vermischt und mit 500 ml VE-Wasser versetzt. Anschließend wurde bei 200 mbar über Kopf ein Wasser/Methanol-Gemisch abgezogen, wobei innerhalb der ersten 6 Stunden weitere 1500 g Wasser langsam zugetropft wurden.

| | |
|---|---|
| Sumpftemperatur | 60,1 °C - 61,4°C |
| Kopftemperatur | 59,2°C - 60,9°C |

Nach 9 Stunden wurden 1765 g Destillat erhalten. Es wurden weitere 1250 g Wasser innerhalb von 5 Stunden zugetropft und gleichzeitig destilliert.
Nach 16 Stunden wurden weitere 1481 g Destillat erhalten. Insgesamt wurden 1096 g Sumpflösung erhalten, die ca. 22,3 Gew.% OPA und ca. 40,5 % Wasser enthielt.
100 g Sumpflösung wurden mit 656,6 g 50 %iger Glutaraldehydlösung verdünnt, sodaß der Gehalt an OPA ca. 3 Gew.% betrug. Die Farbzahl dieser Lösung wurde ermittelt. H = 62.

## Patentansprüche

1. Verfahren zur Herstellung einer wässrigen o-Phthalaldehyd-Glutaraldehydlösung, **dadurch gekennzeichnet, daß** ein Acetal des o-Phthalaldehyds in einer 10 bis 60 %igen wässrigen Glutaraldehydlösung bei Raumtemperatur bis 100°C durch Abspalten des entsprechenden Alkohols in o-Phthalaldehyd überführt und der abgespaltenen Alkohol entfernt wird, worauf die wässrige o-Phthalaldehyd-Glutaraldehydlösung erhalten wird.

2. Verfahren nach Anspruch 1, **dadurch gekennzeichnet, daß** als Acetal ein Tetraalkylacetal oder ein Dialkoxyphthalan mit jeweils 1 bis 4 C-Atome im Alkoxyteil eingesetzt wird.

3. Verfahren nach Anspruch 2, **dadurch gekennzeichnet, daß** ein Dialkoxyphthalan als Acetal eingesetzt wird.

4. Verfahren nach Anspruch 1, **dadurch gekennzeichnet, daß** eine 30 bis 55 Gew.%ige wässrige Glutaraldehydlösung eingesetzt wird.

5. Verfahren nach Anspruch 1, **dadurch gekennzeichnet, daß** die Reaktion bei einem Druck von Normaldruck bis 300 mbar durchgeführt wird.

6. Verfahren nach Anspruch 5, **dadurch gekennzeichnet, daß** die Reaktion bei einem Druck von Normaldruck bis 200 mbar durchgeführt wird.

7. Verfahren nach Anspruch 1, **dadurch gekennzeichnet, daß** der Reaktionslösung während des Abdestillieren des abgespaltenen Alkohols soviel Wasser zugesetzt wird, daß die Konzentration der Glutaraldehydlösung konstant bleibt.

8. Verfahren nach Anspruch 1, **dadurch gekennzeichnet, daß** das Acetal in einer Menge eingesetzt wird, die zu einem o-Phthalaldehydgehalt von 1 bis 30 Gew.% in der wässrigen Glutaraldehydlösung führt.

9. Verfahren nach Anspruch 8, **dadurch gekennzeichnet, daß** das Acetal in einer Menge eingesetzt wird, die zu einem o-Phthalaldehydgehalt von 1 bis 10 Gew.% in der wässrigen Glutaraldehydlösung führt.

## Claims

1. Process for preparing an aqueous o-phthalaldehyde-glutaraldehyde solution, **characterized in that** an acetal of the o-phthalaldehyde is converted in a 10 to 60% strength aqueous glutaraldehyde solution into o-phthalaldehyde at room temperature up to 100°C by eliminating- the corresponding alcohol, and the eliminated alcohol is removed to give the aqueous o-phthalaldehyde-glutaraldehyde solution.

2. Process according to Claim 1, **characterized in that** the acetal used is a tetraalkyl acetal or a dialkoxyphthalan, each having from 1 to 4 carbon atoms in- the alkoxy moiety.

3. Process according to Claim 2, **characterized in that** a dialkoxyphthalan is used as acetal.

4. Process according to Claim 1, **characterized in that** a 30 to 55% strength by weight aqueous glutaraldehyde solution is used.

5. Process according to Claim 1, **characterized in that** the reaction is carried out at a pressure from normal pressure to 300 mbar.

6. Process according to Claim 5, **characterized in that** the reaction is carried out at a pressure from normal pressure to 200 mbar.

7. Process according to Claim 1, **characterized in that** sufficient water is added to the reaction solution during distillation of the eliminated alcohol to keep the concentration of the glutaraldehyde solution constant.

8. Process according to Claim 1, **characterized in that** the acetal is used in an amount which leads to an o-phthalaldehyde content of from 1 to 30% by weight in the aqueous glutaraldehyde solution.

9. Process according to Claim 8, **characterized in that** the acetal is used in an amount which leads to an o-phthalaldehyde content of from 1 to 10% by weight in the aqueous glutaraldehyde solution.

## Revendications

1. Procédé de fabrication d'une solution aqueuse des aldéhydes orthophtalique et glutarique, **caractérisé en ce qu'**un acétal de l'aldéhyde orthophtalique est converti en aldéhyde orthophtalique par élimination de l'alcool correspondant dans une solution aqueuse à 10 à 60 % d'aldéhyde glutarique à une température comprise entre la température ambiante et 100 °C, et que l'alcool dégagé est extrait, moyennant quoi la solution aqueuse des aldéhydes orthophtalique et glutarique est obtenue.

2. Procédé selon la revendication 1, **caractérisé en ce que** l'acétal est un acétal tétra-alkyle ou un dialkoxyphtalane contenant 1 à 4 atomes de C dans le. groupe alcoxyle.

3. Procédé selon la revendication 2, **caractérisé en ce qu'**un dialkoxyphtalane est utilisé comme acétal.

4. Procédé selon la revendication 1, **caractérisé en ce qu'**une solution aqueuse d'aldéhyde glutarique de 30 à 55 % en poids est utilisée.

5. Procédé selon la revendication 1, **caractérisé en ce que** la réaction est conduite à une pression comprise entre la pression normale et 300 mbar.

6. Procédé selon la revendication 5, **caractérisé en ce que** la réaction est conduite à une pression comprise entre la pression normale et 200 mbar.

7. Procédé selon la revendication 1, **caractérisé en ce que**, pendant la distillation de l'alcool éliminé, on ajoute à la solution de réaction la quantité d'eau nécessaire pour que la concentration de la solution d'aldéhyde glutarique reste constante.

8. Procédé selon la revendication 1, **caractérisé en ce que** l'acétal est utilisé en une quantité qui conduit à une concentration de 1 à 30 % en poids d'aldéhyde orthophtalique dans la solution aqueuse d'aldéhyde glutarique.

9. Procédé selon la revendication 8, **caractérisé en ce que** l'acétal est utilisé en une quantité qui conduit à une concentration de 1 à 10 % en poids d'aldéhyde orthophtalique dans la solution aqueuse d'aldéhyde glutarique.
